# EUROPÄISCHE PATENTSCHRIFT

(11) **EP 1 068 108 B1**
(45) Veröffentlichungstag und Bekanntmachung des Hinweises auf die Patenterteilung: **14.06.2006**
(21) Anmeldenummer: 99915548.4
(22) Anmeldetag: 06.03.1999
(51) Int. Cl.: B60R 21/16, B60R 16/02

(54) **STEUERVERFAHREN UND MODUL FÜR INSASSENSCHUTZSYSTEME MIT SPERRUNG EINER VERBINDUNG VOM BUSSYSTEM ZUR INSASSENSCHUTZEINRICHTUNG, INSBESONDERE IN KRAFTFAHRZEUGEN**
CONTROL METHOD AND MODULE FOR OCCUPANT PROTECTION SYSTEMS WITH AN ACTION WHICH BLOCKS A CONNECTION FROM THE BUS SYSTEM TO THE OCCUPANT PROTECTION DEVICE, ESPECIALLY IN MOTOR VEHICLES
PROCEDE DE REGULATION ET MODULE POUR SYSTEMES DE PROTECTION DES OCCUPANTS, NOTAMMENT D'UN VEHICULE A MOTEUR, AVEC BLOCAGE D'UNE LIAISON DU SYSTEME DE BUS VERS L'UNITE DE PROTECTION DES OCCUPANTS

(30) Priorität: 28.03.1998 DE 19813953
(43) Veröffentlichungstag der Anmeldung: 17.01.2001
(73) Patentinhaber: Conti Temic microelectronic GmbH, 90411 Nürnberg (DE); ROBERT BOSCH GMBH, 70442 Stuttgart (DE)
(72) Erfinder: BISCHOFF, Michael, D-63768 Rottenberg (DE); RINKENS, Johannes, D-85055 Ingolstadt (DE); SCHÄFFER, Stefan, D-85051 Ingolstadt (DE); FENDT, Günter, D-86529 Schrobenhausen (DE); NITSCHKE, Werner, D-71254 Ditzingen (DE); KARL, Otto, D-71229 Leonberg (DE); BAUER, Joachim, D-71720 Oberstenfeld (DE)
(86) Internationale Anmeldenummer: PCT/EP1999/001459
(87) Internationale Veröffentlichungsnummer: WO 1999/050105

(56) Entgegenhaltungen:
- WO-A-97/23369
- DE-A- 19 646 387
- US-A- 5 357 141

## Beschreibung

Die Erfindung betrifft ein Steuerverfahren für Insassenschutzsysteme, insbesondere in Kraftfahrzeugen, mit einer Zentraleinheit und einer Mehrzahl über ein Bussystem verbundener Module.

Ein derartiges Steuerverfahren ist insbesondere der nicht vorveröffentlichten Patentanmeldung DE 196 46 387, jedoch auch grundsätzlich bspw. aus dem Artikel von Zimmermann: CAN - Serielle Datenübertragung für Echtzeitanforderungen. In: Elektronik 5/1991, S. 76 - 78 zu entnehmen.

Weiterhin ist aus WO-A-97/23369 ein Airbagsystem bekannt, bei dem zur Vermeidung von Fehlauslösungen nach einer Reset phase des Systems zunächst die Auslösung der Zündpille gesperrt, und diese Sperrung erst nachfolgend aufgehoben wird.

Als nachteilig hat sich herausgestellt, daß die Module vor dem Zuweisen einer Soll-Information eine quasi undefinierte Zufallsinformation in den zur Speicherung erforderlichen Zellen enthalten können. Wird von einem solchen, noch nicht mit einer Soll-Information versehenen Modul eine Ist-Information empfangen, so kann es vorkommen, daß der Vergleich zwischen der Ist-Information und der Zufallsinformation die für die Auslösung vorgegebene Beziehung erfüllt und es zur Auslösung kommt. Auch Störungen durch elektromagnetische Felder (EMV) oder elektrostatische Aufladung (ESD) können Signale am Eingang des Moduls erzeugen, die quasi einer derartigen Ist-Information entsprechen und zur Auslösung führen. Neben erheblichen Kosten für die Reparatur bzw. Austausch eines solchen fälschlicherweise aktivierten Moduls sind auch eventuelle Sicherheitsrisiken, insbesondere bei pyrotechnisch auslösenden Modulen (Airbags, Gurtstraffer, etc.) für die mit der Montage betrauten Arbeitskräfte vorhanden, die nicht tragbar sind.

Aus der DE 43 15 494 C1 ist darüber hinaus eine Anordnung und ein Verfahren zur Programmierung wenigstens eines Kfz-Steuergerätes zu entnehmen, bei der wenigstens eines der Steuergeräte auch bei ruhendem Fahrzeug dauernd stromversorgt ist, einen Speicher für Fahrzeugkonfigurationsdaten aufweist und bei Entnahme aus dem Fahrzeug seinen Speicher löst, zusätzlich jedoch ein resistentes Programmierprogramm enthält, mittels dem eine elektronische "Nicht-Programmiert-Marke" oder als solche die Leere des Speichers feststellen und als Kriterium verwenden kann, um selbsttätig die erforderlichen Fahrzeugkonfigurationsdaten von einem Zentralsteuergerät anzufordern. Auch ein solches Verfahren kann bei einer Insassenschutzeinrichtung nicht sicherstellen, daß Störsignale auf dem Bussystem nicht doch zu einer vorzeitigen Auslösung führen.

Aufgabe der Erfindung ist es daher, ein Steuerverfahren und ein Modul anzugeben, mittels dem die geschriebenen Nachteile des Standes der Technik vermieden werden.

Diese Aufgabe wird durch die kennzeichnenden Merkmale des Patentanspruchs 1 für das Verfahren sowie des Anspruchs 8 für das Modul gelöst. Vorteilhafte Weiterbildungen sind den Unteransprüchen zu entnehmen.

Durch die Sperrung wird ein vorzeitiges versehentliches Auslösen der noch nicht mit einer Soll-Information versehenen Module wirksam verhindert. Die Verwendung der gleichen Speicherstelle für Sperr- wie auch Soll-Information ermöglicht eine besonders einfache Aktivierung und einen geringen Bauelementebedarf.

Besonders vorteilhaft ist es, wenn das Modul zum Einbau bei der Herstellung automatisch auf die Sperrinformation gesetzt wird. Alle Module weisen somit während des Transports und während der Montage die Sperrinformation auf. Die Module werden somit erst nach dem Einbau aktiviert.

Die Erfindung wird nachfolgend anhand von Ausführungsbeispielen und Figuren erläutert.

Kurze Beschreibung der Figuren:
- Figur 1: Blockschema eines Sicherheitssystems
- Figur 2: Details einer Weiterbildung des Moduls

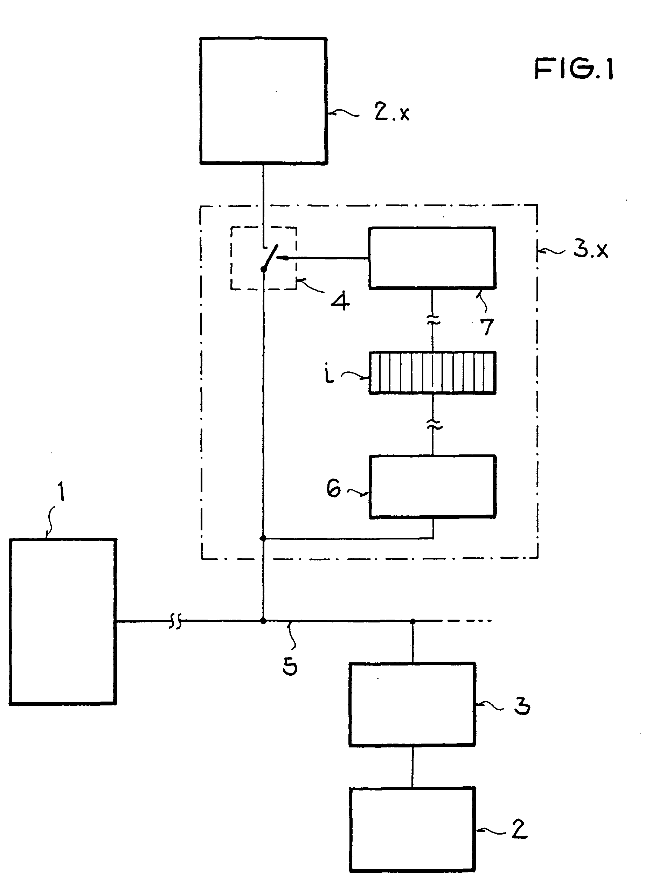

Die Figur 1 zeigt ein Blockschema eines Insassenschutzsystems, bestehend aus einer Zentraleinheit 1, mit der eine Mehrzahl von Modulen 3 von Insassenschutzeinrichtungen 2 über wenigstens eine Busleitung 5 verbunden ist. Hier ist exemplarisch das Modul 3.x mit der Adresse x im Detail gezeigt. Die Sperr- bzw. Soll-Information wird im Feld i abgelegt. Zwar kann bereits als soll-Information bereits die Adresse des Moduls angesehen werden, wobei die unadressierten Module dann erfindungsgemäß gegen die Auslösung gesperrt sind, im vorliegenden Ausführungsbeispiel soll jedoch eine Weiterbildung näher erläutert werden, bei der neben der Adresse eine von dieser verschiedene Soll-Information gespeichert wird.

Die Soll-Information ist ein Schwellwert, der in Bezug auf die Ist-Information als Auslöseschwelle wirkt, wobei die Soll-Information ein aktueller, bspw. digitaler Wert einer sicherheitsrelevanten Meßgröße, bspw. der Beschleunigung oder einer aus ihr abgeleiteten Unfallklasse ist.

Mit der Herstellung des Moduls 3.x wird dem Feld i automatisch die Sperrinformation zugewiesen, die bspw. aus einem für das Sicherheitssystem generell vereinbarten n-Bit-Code-Wort besteht. In Abhängigkeit von dem Inhalt von i wird die Sperr -bzw. Freigabeanordnung 4.x des Moduls 3.x von der Freigabelogik 7 deshalb solange gesperrt gehalten, bis die Zentraleinheit 1 die Datenerkennung 6 des Moduls 3.x eine Soll-Information sendet. Eine Auslösung ist somit vorher nicht möglich.

Erst indem im Feld i die bei der Aktivierung des Sicherheitssystems an das Modul 3.x gesendete Soll-Information, bspw. ein von der Sperrinformation verschiedenes n-Bit-Code-Wort als Schwellwert einer bestimmten Unfallklasse oder eines bestimmten Beschleunigungswertes oder einfach nur eine Adresse von der Datenerkennung 6 auf der Busleitung 5 erkannt und im Feld i abgespeichert wird, wird die Sperr -bzw. Freigabeanordnung 4 freigegeben und das Modul 3.x bzw. die nachgeordnete Insassenschutzeinrichtung 2.x auslösbar.

Eine Auslösung erfolgt dann, wenn bspw. die Zentraleinheit 1 eine Ist-Information, bspw. einen Beschleunigungswert oder eine Unfallklasse sendet, die mit der im Modul 3.x gespeicherten Soll-Information, also dem Schwellwert, in einer vorgegebenen Beziehung steht, bspw. identisch oder größer ist. Die Freigabelogik 7 führt bspw. eine bitweise logische UND - Verknüpfung zwischen der Soll- und Ist-Information durch und löst bei Übereinstimmung aus. Dann wird das Modul ausgelöst, also bspw. der Zünder einer Insassenschutzeinrichtung (Airbag etc.) gezündet. Wird die Sperrinformation in einem anderen als dem Feld i gespeichert, kann anstelle der Überschreibung mit der Soll-Information durch eine logische Negation die Freigabe bewirkt werden. Ist keine Soll-Information gespeichert und auf der Busleitung 5 tritt dennoch eine zur Auslösung geeignete Ist-Information auf, ist die Auslösung erfindungsgemäß nicht möglich.

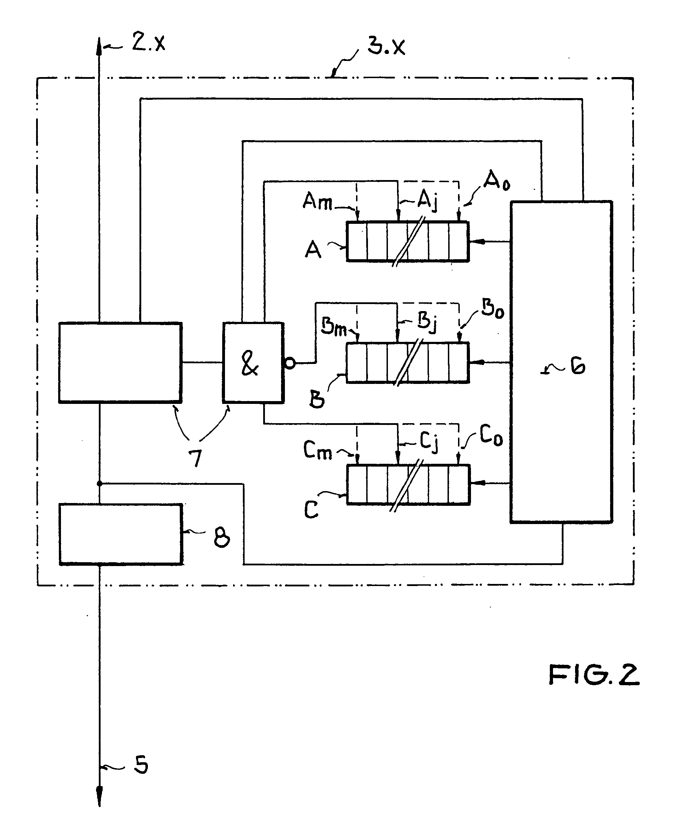

Ein Beispiel, bei dem die Soll-Information in einem Feld abgespeichert wird, zeigt die Figur 2. Das Modul 3.x ist analog zu Fig. 1 zwischen der Busleitung 5 und der Insassenschutzeinrichtung 2.x angeordnet. Die Datenerkennung 6 steuert in diesem Ausführungsbeispiel drei voneinander verschiedene gleich große Felder A, B und C an. Bspw. im Feld A wird in den m Bit die Soll-Information abgelegt. Um eine Auslösung vor der Zuweisung der Soll-Information wirksam zu verhindern, ist außerdem im Feld B eine Sperrinformation abgelegt. Im Feld C werden die jeweils aktuellen ist-Informationen abgelegt. Zur Freigabeprüfung wird dann bitweise der Inhalt der Felder Aⱼ, Bⱼ und Cⱼ logisch miteinander UND-verknüpft.

Die Sperrinformation wirkt dabei wie ein zusätzlicher Prüfschlüssel für die Soll-Information. Entsprechend des negierten UND-Eingangs zur Freigabelogik 7 ist kann eine Freigabe nur erfolgen, wenn neben der Soll- und Ist-Information auch die Sperrinformation entsprechend gesetzt ist. Durch die Sperrinformation kann also die Auslösung ebenso verhindert werden, wie wenn überhaupt keine Soll-Information in A abgelegt ist. Sind für alle m Bits (O...j...m) bspw. Sperr- und Soll-Information nicht gesetzt und somit auf dem Ausgangswert Null, so kann unabhängig von einer eventuell erkannten Ist-Information die Insassenschutzeinrichtung nicht versehentlich ausgelöst werden. Ist aber die Soll-Information sowie die Sperrinformation dazu passend gesetzt, bspw. genau negiert, so erfolgt bei Übereinstimmung eines oder mehrerer Bits der Ist-Information mit der Soll-Information die Freigabe. Die einzelnen Bits Aⱼ der Soll-Information in A können dabei für jeweils einen bestimmten Unfalltyp stehen. Wird bspw. für die betrachtete Insassenschutzeinrichtung eine Auslösung sowohl bei einem Frontcrash als auch bei jeder Art von seitenaufprall gewünscht, so wären alle Bits der Soll-Information Aⱼ gesetzt und die Sperrinformation Bⱼ jeweils mit Nullen belegt. Sollen aufgrund eines besonderen Sitzbelegungszustandes, bspw. eines nicht belegten Beifahrersitzes einzelne Module aktuell gesperrt werden, kann dies auch mittels der Sperrinformation erfolgen, indem für die Dauer dieses Zustandes die betreffenden Bits der Sperrinformation Bⱼ auf Eins gesetzt werden. Wird nun über die Busleitung eine Ist-Information übertragen, die bspw. einen Seitenaufprall charakterisiert und folglich das betreffende Bit Cⱼ gesetzt ist, so wird gibt das Modul 3.x die Insassenschutzeinrichtung 2.x frei, wenn die entsprechende Soll-Information Aⱼ gesetzt und durch die Sperrinformation Bⱼ nicht gesperrt ist.

Eine separate Freigabeanordnung, wie in Fig. 1 dargestellt, ist nicht zwingend erforderlich sondern ergibt sich durch die logische Verknüpfung in der Freigabelogik 7.

Neben den Unfalltypen kann in der Soll-Information auch ein Schwellwert hinterlegt werden, indem bspw. alle Bits bis Aᵢ auf Null, alle höheren auf Eins gesetzt werden und die Ist-Information entsprechend dem aktuellen wert mit Einsen bei C₀ beginnend aufgefüllt werden. durch die Sperrinformation in B kann auch in diesem Fall zusätzlich eine Auslösung unterdrückt werden.

Außerdem weist das Ausführungsbeispiel gemäß Fig. 2 eine Störsignalsicherung 8 am Eingang des Moduls 3.x zum Bussystem 5 hin auf. Durch diese Störsignalsicherung 8 wird sichergestellt, daß nicht etwa durch elektromagnetische oder elektrostatische Effekte (EMV, ESD) ein Modul durch Setzen einer gestörten Soll-Information entsperrt werden kann. Dazu kann diese Störsignalsicherung 8 in eine Bussignalvorverarbeitung integriert sein, die bspw. das Bussignal, das aus einer Gleichspannung zur Energieversorgung und aufmodulierten Datenimpulsen besteht. Zunächst werden die Gleichanteile abgespalten. Diese führen zu einer Auf- oder Entladung eines Energiezwischenspeichers. Der Wechselanteil wird weiterverarbeitet, indem dieser zunächst bandpaßgefiltert und nachfolgend A/D-gewandelt wird. EMV- oder ESD-Störungen, wie sie insbesondere auch während des Einbaus der Module auftreten, werden dabei herausgefiltert und können daher nicht versehentlich als Soll-Information angesehen werden. Eine derartige Störsignalsicherung filtert alle gestörten Datenimpulse heraus, sowohl für die Soll-Information als auch bei nachfolgend eventuell gestörten Ist-Informationen.

Alle gezeigten und beschriebenen Ausführungsbeispiele weisen jedoch die charakteristische Sperrung gegen die Auslösung automatisch immer dann auf, wenn keine Soll-Information in A gesetzt ist.

## Patentansprüche

1. Steuerverfahren für ein Insassenschutzsystem, insbesondere in Kraftfahrzeugen, mit einer Zentraleinheit (1) und einer Mehrzahl von miteinander über ein Bussystem (5) verbundenen Modulen (3) von Insassenschutzeinrichtungen (2),
a) bei dem jedem Modul (3.x) von der Zentraleinheit (1) eine binäre (m>1) Solldaten-Information zugewiesen wird und
b) bei dem nur diejenigen Module ausgelöst werden, deren binäre Solldaten-Information zu einer nachfolgend zu übertragenden binären Istdaten-Information in einer vorgegebenen Beziehung steht, wobei
c) Module, denen noch keine binäre Solldaten-Information zugewiesen wurde, mittels einer Sperrvorrichtung (4, 7) gegen eine Auslösung gesperrt sind.

2. Steuerverfahren nach Anspruch 1, **dadurch gekennzeichnet, daß** jedes Modul durch Zuweisung einer Adresse adressierbar ist und jedem Modul darüber hinaus von der Zentraleinheit eine von der Adresse verschiedene Soll-Information zugewiesen wird.

3. Steuerverfahren nach Anspruch 1 oder 2, **dadurch gekennzeichnet, daß** die Sperrung gegen die Auslösung **dadurch** erfolgt, **daß** die Module, denen noch keine Soll-Information zugewiesen wurde, vorab an deren Stelle eine vereinbarte Sperrinformation gespeichert wird.

4. Steuerverfahren nach einem der vorangehenden Ansprüche, **dadurch gekennzeichnet, daß** die Sperrung aufgehoben wird, in den in dem Modul erfolgreich eine Soll-Information gespeichert wird.

5. Steuerverfahren nach einem der vorangehenden Ansprüche, **dadurch gekennzeichnet, daß** die Module (3) der Insassenschutzeinrichtungen (2) pyrotechnische Zünder aufweisen und nach Aufhebung der Sperrung und Zuweisung einer Soll-Information beim Erfüllen der vorgegebenen Beziehung von Ist- und Soll-Information diese Zünder der Insassenschutzeinrichtungen (2) ausgelöst werden.

6. Steuerverfahren nach einem der vorangehenden Ansprüche, **dadurch gekennzeichnet, daß** die Soll-Information ein Schwellwert und die Ist-Information ein aktueller Wert einer sicherheitsrelevanten Meßgröße ist.

7. Steuerverfahren nach Anspruch 1, **dadurch gekennzeichnet, daß** einem Modul als Soll-Information eine Adresse zugewiesen wird, wobei alle Module, denen noch keine Adresse als Soll-Information zugewiesen wurde, gegen eine Auslösung gesperrt sind und nachfolgend das Modul über die Adresse als Ist-Information angesprochen wird.

8. Steuerverfahren nach einem der vorangehenden Ansprüche, **dadurch gekennzeichnet, daß** bei der Herstellung des Moduls dieses automatisch auf eine Sperrinformation gesetzt wird und erst nach dem Einbau in das Insassenschutzsystem durch die Zentraleinheit durch Überschreiben der Sperrinformation mit einer Soll-Information entsperrt wird.

9. Steuerverfahren nach einem der vorangehenden Ansprüche, **dadurch gekennzeichnet, daß** am Eingang vom Bussystem jedes Moduls eine Störsignalsicherung (8) durchgeführt wird.

10. Steuerverfahren nach einem der vorangehenden Ansprüche, **dadurch gekennzeichnet, daß** jedes Modul am Eingang vom Bussystem her eine Störsignalsicherung (8) aufweist.

## Claims

1. Control method for a passenger protection system, in particular in motor vehicles, with a central processing unit (1) and a plurality of modules (3) of passenger safeguards (2), said modules (3) being interconnected via a bus system (5),
a) in which the central processing unit (1) assigns a piece of binary (m > 1) scheduled data information to each module (3.x) and
b) in which only those modules are tripped whose piece of binary scheduled data information has a predetermined relation to a piece of binary actual data information that is to be transmitted subsequently, wherein
c) modules to which no piece of binary scheduled data information has been assigned yet are blocked against being tripped by means of a blocking device (4, 7).

2. Control method according to claim 1, **characterized in that** each module is addressable by assigning an address to it and the central processing unit in addition assigns to each module a piece of scheduled information that is different from the address.

3. Control method according to claim 1 or 2, **characterized in that** the blocking against tripping is achieved **in that** in those modules to which no piece of scheduled information has been assigned yet a specified piece of blocking information is stored in place of the piece of scheduled information in advance.

4. Control method according to any one of the preceding claims, **characterized in that** the blocking state is lifted by successfully storing a piece of scheduled information in the module.

5. Control method according to any one of the preceding claims, **characterized in that** the modules (3) of the passenger safeguards (2) comprise pyrotechnic ignition devices and these ignition devices of the passenger safeguards (2) are tripped after lifting the blocking state and assigning a piece of scheduled information if the piece of actual information has the predetermined relation to the piece of scheduled information.

6. Control method according to any one of the preceding claims, **characterized in that** the piece of scheduled information is a threshold value and the piece of actual information is a current value of a safety-relevant measurand.

7. Control method according to claim 1, **characterized in that** an address representing a piece of scheduled information is assigned to a module, wherein all modules to which no address representing a piece of scheduled information has been assigned yet are blocked against being tripped and the module is subsequently addressed via the address representing a piece of actual information.

8. Control method according to any one of the preceding claims, **characterized in that** the manufacture of the module includes the automatic setting of this module to a piece of blocking information and the central processing unit unblocks the module by overwriting the piece of blocking information with a piece of scheduled information only after the installation of the module in the passenger protection system.

9. Control method according to any one of the preceding claims, **characterized in that** each module is protected against interfering signals (8) at its input from the bus system.

10. Control method according to any one of the preceding claims, **characterized in that** each module comprises a device for protection against interfering signals (8) at its input from the bus system.

## Revendications

1. Procédé de commande pour un système de protection des passagers, notamment dans des véhicules automobiles, avec une unité centrale (1) et une pluralité de modules (3) de dispositifs de protection de passager (2) reliés entre eux par un système de bus (5), où
a) une information binaire (m>1) de données de consigne est attribuée à chaque module (3.x), et où
b) seuls sont déclenchés les modules dont l'information binaire de données de consigne est dans une relation prescrite avec une information binaire de données effectives à transmettre consécutivement, et où
c) les modules auxquels une information binaire de données de consigne n'aura pas encore attribuée sont verrouillés contre un déclenchement au moyen d'un dispositif de blocage (4, 7).

2. Procédé de commande selon la revendication 1, **caractérisé en ce que** chaque module est adressable par attribution d'une adresse et **en ce qu'**une information de consigne différente de l'adresse est en outre attribuée à chaque module par l'unité centrale.

3. Procédé de commande selon la revendication 1 ou 2, **caractérisé en ce que** le verrouillage contre le déclenchement est exécuté **en ce qu'**une information de blocage convenue est préalablement mémorisée dans les modules auxquels une information de données de consigne n'aura pas encore attribuée.

4. Procédé de commande selon l'une des revendications précédentes, **caractérisé en ce que** le verrouillage est supprimé par mémorisation réussie d'une information de consigne dans le module.

5. Procédé de commande selon l'une des revendications précédentes, **caractérisé en ce que** les modules (3) des dispositifs de protection de passager (2) comportent des amorces pyrotechniques et **en ce que** ces amorces des dispositifs de protection de passager (2) sont déclenchées après suppression du blocage et attribution d'une information de consigne lorsque la relation prescrite entre information de consigne et information effective est présentée.

6. Procédé de commande selon l'une des revendications précédentes, **caractérisé en ce que** l'information de consigne est une valeur-seuil et l'information effective une valeur actuelle d'une grandeur de mesure pertinente pour la sécurité.

7. Procédé de commande selon la revendication 1, **caractérisé en ce qu'**une adresse est attribuée à un module en tant qu'information de consigne, tous les modules auxquels une adresse n'aura pas encore attribuée en tant qu'information de consigne étant verrouillés contre un déclenchement et le module étant consécutivement déclenché par l'adresse en tant qu'information effective.

8. Procédé de commande selon l'une des revendications précédentes, **caractérisé en ce que** lors de la fabrication du module, celui-ci est réglé par défaut sur une information de blocage, et **en ce qu'**il n'est débloqué par l'unité centrale qu'après montage dans le système de protection des passagers, par écrasement de l'information de blocage par une information de consigne.

9. Procédé de commande selon l'une des revendications précédentes, **caractérisé en ce qu'**une sécurité de signal parasite (8) est exécutée à l'entrée du système de bus de chaque module.

10. Procédé de commande selon l'une des revendications précédentes, **caractérisé en ce que** chaque module comporte une sécurité de signal parasite (8) à l'entrée du système de bus.
